# FASCICULE DE BREVET EUROPEEN

(11) **EP 3 841 629 B1**
(45) Date de publication et mention de la délivrance du brevet: **10.04.2024**
(21) Numéro de dépôt: 19753394.6
(22) Date de dépôt: 20.08.2019
(51) Int. Cl.: H01M 50/204

(54) **SYSTÈME D'ACCORAGE D'UN PACK BATTERIE D'UN BÂTIMENT NAVAL**
SYSTEM ZUM ANDOCKEN EINES BATTERIESATZES EINES SCHIFFS
SYSTEM FOR DOCKING A BATTERY PACK OF A NAVAL SHIP

(30) Priorité: 20.08.2018 FR 1800891
(43) Date de publication de la demande: 30.06.2021
(73) Titulaire: Naval Group, 75015 Paris (FR)
(72) Inventeur: BODET, Ludovic, 56100 Lorient (FR)
(74) Mandataire: Lavoix
(86) Numéro de dépôt international: PCT/EP2019/072208
(87) Numéro de publication internationale: WO 2020/038913

(56) Documents cités:
- EP-A1- 1 864 863
- DE-A1-102013 216 271
- DE-U1-202017 107 818
- JP-A- 2018 071 326
- US-A- 4 538 844
- US-A1- 2001 024 039
- US-A1- 2010 115 846
- US-A1- 2011 201 238
- US-A1- 2011 223 459

## Description

La présente invention concerne un pack batterie d'un bâtiment naval, le pack batterie comprenant un coffre destiné à recevoir une pluralité d'accumulateurs, et un système d'accorage amovible du coffre à une enceinte du bâtiment naval.

Aujourd'hui, les packs batterie installées à bord des navires sont des parallélépipèdes montés verticalement. Ils sont calés entre eux suivant le plan horizontal du navire, par des cales en bois rentrées à force. Une méthode complémentaire de fixation est assurée par un croc en acier positionné sous le pack batterie et accroché au fond du local.

Il est connu en particulier des documents DE 20 2017 107818, DE 10 2013 216 271 et US 2011/0223459 des systèmes de fixation de packs batterie. En outre, il est connu du document EP 1 864 863 un système de calage d'une batterie. Le document US 2011/201238 décrit un pack batterie selon le préambule de la revendication 1. Les documents JP 2018-71326, US 2001/024039 et US 4 538 844 décrivent des organes de verrouillage d'éléments de rangement.

Les packs batterie sont aujourd'hui conçus pour être maintenus en position par effet de compression sur les parois du local.

Cette solution ne donne pas entièrement satisfaction.

En effet, des forces excessives de cisaillement et de compression sont appliquées sur le matériel d'accorage, pouvant entraîner un endommagement de ce matériel et dès lors des packs batteries eux-mêmes. Ces forces excessives proviennent notamment des jeux de montage et de fabrication des packs, accorages et local, de la méthode de fixation des packs dans le local, et de désalignements du matériel d'accorage et des packs entre eux.

Un but de l'invention consiste ainsi à fournir un pack batterie muni d'un système d'accorage offrant une amélioration de l'alignement des packs entre eux, une réduction des problèmes liés aux jeux mécaniques.

A cet effet, l'invention a pour objet un pack batterie d'un bâtiment naval selon la revendication 1.

Suivant d'autres aspects avantageux de l'invention, le pack batterie comprend une ou plusieurs des caractéristiques des revendications 2 à 8, prise(s) isolément ou suivant toutes les combinaisons techniquement possibles.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue de dessus d'une enceinte d'un bâtiment naval équipée d'une pluralité de packs batterie ;
- la figure 2 est une vue de dessus d'un pack batterie selon un premier mode de réalisation de l'invention ;
- la figure 3 est une vue de dessus du pack batterie de la figure 2, assemblé à un autre pack batterie ;
- la figure 4 est une vue en coupe partielle selon un plan longitudinal du pack batterie de la figure 2 ;
- la figure 5 est une vue en coupe partielle du pack batterie selon le plan transversale V-V de la figure 4 ;
- la figure 6 est une vue en coupe partielle selon le plan longitudinal VI-VI de la figure 5, l'élément mâle étant en position déverrouillée ;
- la figure 7 est une vue similaire à la Figure 6, l'élément mâle étant en position verrouillée ;
- la figure 8 est une vue en coupe partielle d'un pack batterie selon une variante du premier mode de réalisation, selon un plan longitudinal ;
- la figure 9 est une vue en coupe partielle selon un plan longitudinal d'un pack batterie selon un deuxième mode de réalisation de l'invention, en position verrouillée ;
- la figure 10 est une vue en coupe partielle selon un plan longitudinal du pack batterie de la Figure 9, en position déverrouillée ;
- la figure 11 est une vue en coupe partielle du pack batterie selon le plan transversal XI-XI de la figure 10, en position déverrouillée ;
- la figure 12 est une vue selon une coupe transversale de parois latérales d'une enceinte équipées d'un système d'accorage de packs batterie ;
- la figure 13 est une vue selon une coupe selon un plan latéral d'une paroi d'une enceinte d'un bâtiment naval, équipée d'un système d'accorage d'un pack batterie.

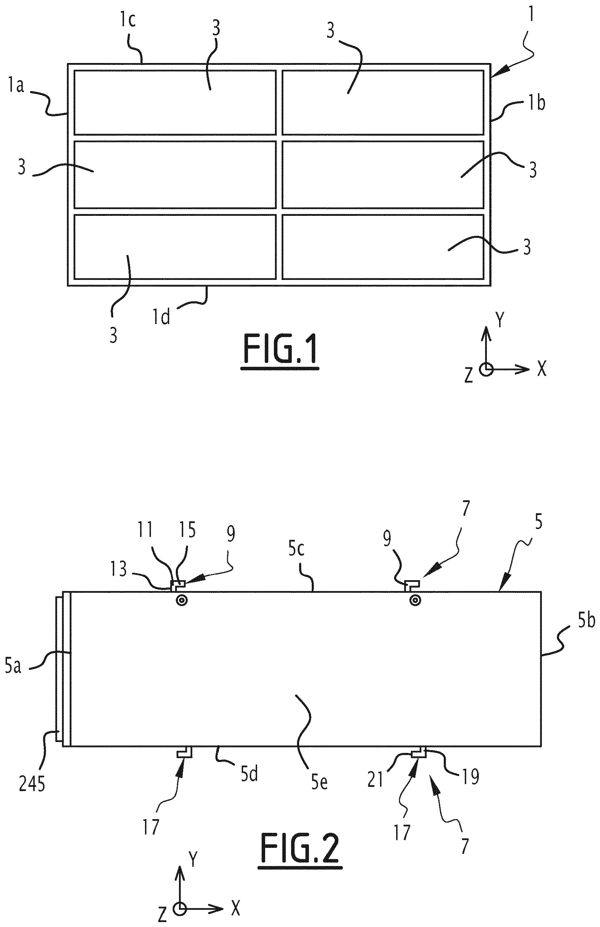

On a représenté sur la figure 1, de manière schématique, une enceinte ou local 1 d'un bâtiment naval équipée d'une pluralité de pack batterie 3, vue de dessus.

On entend par pack batterie un assemblage électrique et mécanique d'accumulateurs, chaque accumulateur étant une brique énergétique élémentaire de stockage d'énergie. Par exemple, les accumulateurs sont de type Li-ion.

Chaque pack batterie 3 comprend ainsi un coffre recevant, ou destiné à recevoir, une pluralité d'accumulateurs.

L'enceinte 1 est délimitée, dans le sens longitudinal, par deux parois transversales 1a et 1b sensiblement parallèles l'une à l'autre, et transversalement par deux parois latérales 1c et 1d, sensiblement parallèles l'une à l'autre.

L'enceinte 1 comprend par ailleurs une paroi de fond, non visible sur la figure 1, sur laquelle reposent les packs batterie 3.

Dans ce qui précède et ce qui suit, on désigne par « longitudinal » un axe ou une direction s'étendant, en fonctionnement, parallèlement à l'axe longitudinal du navire. Une telle direction longitudinale est désignée par la référence X sur la figure 1.

On désigne par « transversal » un axe ou une direction s'étendant, en fonctionnement, parallèlement à l'axe transversal du navire. Une telle direction transversale est désignée par la référence Y sur la figure 1.

On désigne par ailleurs par « vertical » un axe ou une direction s'étendant orthogonalement aux axes longitudinal et transversal, i.e. parallèlement à l'axe vertical du navire. Une telle direction verticale est désignée par la référence Z sur la figure 1.

En outre, on appelle plan longitudinal un plan sensiblement parallèle aux directions longitudinale et transversale (XY). On appelle plan transversal un plan sensiblement parallèle aux directions transversale et verticale (YZ). Enfin, on appelle plan latéral un plan sensiblement parallèle aux directions longitudinale et verticale (XZ).

Les packs batterie 3 sont de forme sensiblement parallélépipédique, de mêmes dimensions. Les packs batterie 3 sont ainsi alignés en formant un réseau lignes-colonnes dans l'enceinte 1. Dans l'exemple illustré, les packs batterie 3 sont au nombre de six, alignés selon deux lignes s'étendant chacune selon une direction transversale et trois colonnes s'étendant chacune selon une direction longitudinale.

Les packs batterie 3 sont fixés les uns aux autres et aux parois 1a, 1b, 1c et 1d de l'enceinte 1, de manière amovible, au moyen de systèmes d'accorage décrits ci-après.

On a en particulier illustré sur la figure 2 un pack batterie, selon un premier mode de réalisation de l'invention.

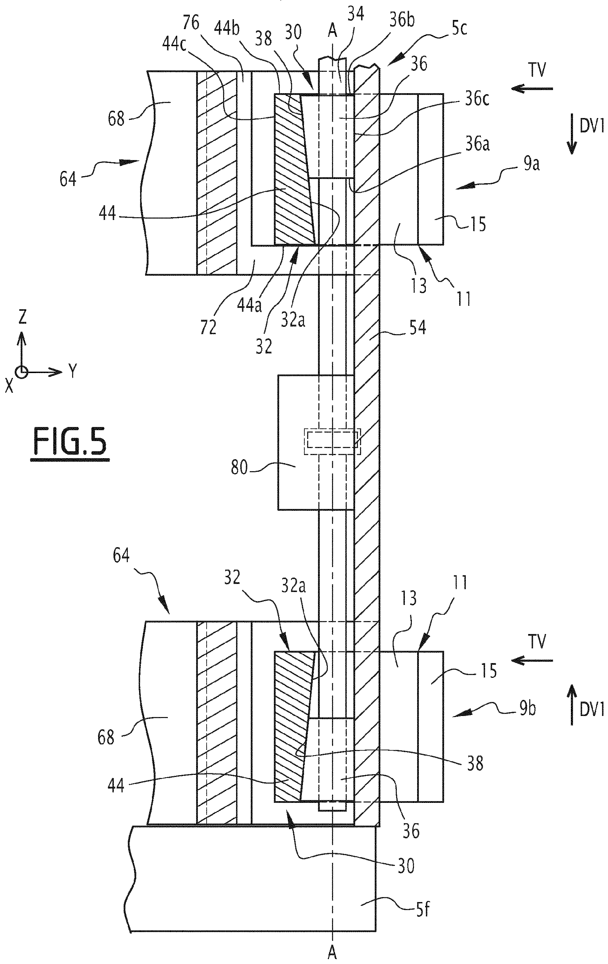

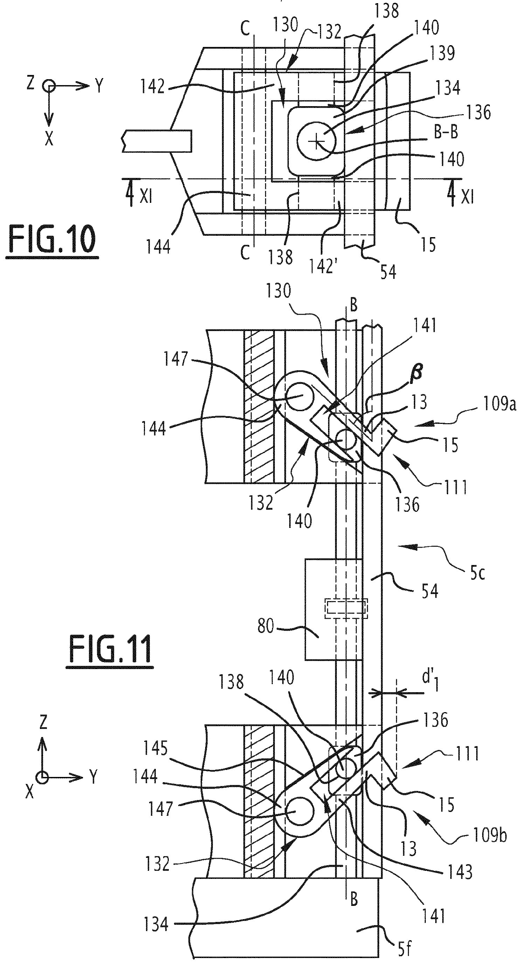

Le pack batterie 3 comprend un coffre 5 délimité dans le sens longitudinal par deux cloisons transversales 5a et 5b sensiblement parallèles l'une à l'autre, et transversalement par deux cloisons latérales 5c et 5d, sensiblement parallèles l'une à l'autre. Le coffre 5 est en outre délimité verticalement par une cloison supérieure 5e et par une cloison inférieure 5f (visible sur les figures 5 et 11), destinée à prendre appui sur la paroi de fond de l'enceinte 1.

Le pack batterie 3 comprend un système d'accorage amovible du coffre 5 à l'enceinte 1. Par accorage amovible à l'enceinte 1, on entend que le système d'accorage permet de fixer le coffre 5, de manière amovible, à une paroi de l'enceinte 1, ou à un autre pack batterie lui-même fixé, directement ou indirectement, à cette paroi.

Le système d'accorage comprend un système d'accorage latéral 7. Le système d'accorage latéral 7 est destiné à fixer les packs batterie 3 les uns aux autres latéralement, selon une direction transversale, et à fixer les packs batteries aux parois latérales 1c, 1d de l'enceinte 1.

Le système d'accorage latéral 7 du pack batterie 3 comprend au moins un organe de verrouillage 9 comprenant un élément mâle 11 en forme de crochet, monté sur une première cloison latérale 5c du coffre 5.

L'élément mâle 11 en forme de crochet est mobile entre une position déverrouillée et une position verrouillée. En particulier, l'élément mâle 11 est actionnable entre sa position déverrouillée et sa position verrouillée.

Plus spécifiquement, dans sa position verrouillée, l'élément mâle 11 est propre à fixer le coffre 5 au coffre d'un pack batterie latéralement adjacent audit coffre 5, ou à une paroi latérale 1c, 1d de l'enceinte 1.

Dans sa position déverrouillée, l'élément mâle 11 autorise un déplacement transversal du coffre 5 par rapport à l'autre coffre adjacent ou par rapport à la paroi latérale 1c, 1d de l'enceinte 1.

Dans sa position verrouillée, l'élément mâle 11 n'autorise pas de déplacement transversal du coffre 5 par rapport à l'autre coffre ou par rapport à la paroi latérale 1c, 1d de l'enceinte 1.

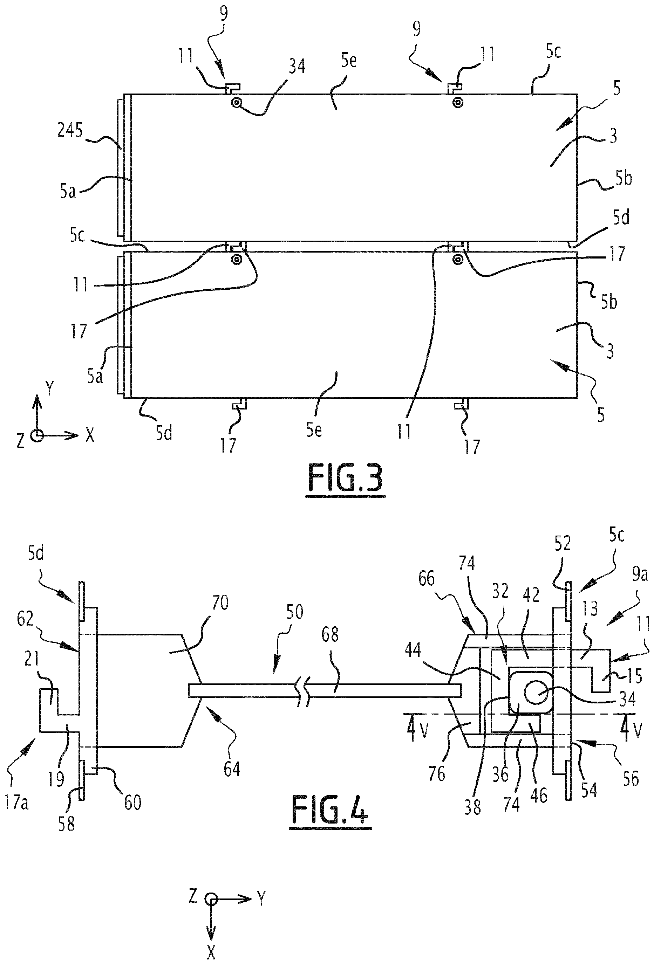

Le système d'accorage latéral 7 comprend en outre un mécanisme d'actionnement de l'élément mâle 11 depuis sa position déverrouillée jusqu'à sa position verrouillée, qui sera décrit ci-après en référence à la figure 4.

L'élément mâle 11 comprend une portion intermédiaire 13 et une portion de blocage 15. Au moins dans la position verrouillée, la portion intermédiaire 13 fait saillie depuis la première cloison latérale 5c orthogonalement à celle-ci, et la portion de blocage 15 s'étend orthogonalement à la portion intermédiaire 13 et parallèlement à la première cloison latérale 5c, depuis l'extrémité latérale de la portion intermédiaire 13.

En particulier, dans le mode de réalisation de la figure 2, la portion de blocage 15 s'étend selon une direction longitudinale depuis l'extrémité latérale de la portion intermédiaire 13, vers l'avant du navire, au moins dans la position verrouillée de l'élément mâle 11.

Dans l'exemple illustré, le pack batterie 3 est muni de quatre organes de verrouillages 9 montés sur la première cloison latérale 5c, dont seuls deux sont visibles sur la figure 2. En effet, le pack batterie comprend deux premiers organes de verrouillages 9a alignés le long de la première cloison latérale 5c selon une direction longitudinale, et deux seconds organes de verrouillage 9b (dont un visible sur la figure 5), disposés sur la première cloison latérale 5c dans l'alignement vertical des deux premiers organes de verrouillage 9a.

Dans l'exemple illustré, les deux premiers organes de verrouillages 9a sont tels que la portion de blocage 15 de leurs éléments mâles 11 s'étendent dans la même direction, par exemple vers l'avant, depuis la portion intermédiaire 13.

Par exemple, les deux seconds organes de verrouillages 9b sont tels que la portion de blocage 15 de leurs éléments mâles 11 s'étendent également dans la même direction, par exemple vers l'avant, depuis la portion intermédiaire 13. Notamment, les portions de blocage des deux seconds organes de verrouillages 9b s'étendent dans la même direction que les portions de blocage des deux premiers organes de verrouillages 9a. En variante, les portions de blocage des deux seconds organes de verrouillages 9b s'étendent dans une direction opposée à celle des portions de blocage des deux premiers organes de verrouillages 9a.

Le système d'accorage latéral 7 du pack batterie 3 comprend par ailleurs au moins un élément de fixation complémentaire 17 à l'élément mâle 11.

Le ou chaque élément de fixation complémentaire 17 est disposé sur la deuxième cloison latérale 5d du coffre, opposée et parallèle à la première cloison latérale 5c.

Le ou chaque élément de fixation complémentaire 17 est monté de manière fixe sur la deuxième cloison latérale 5d.

Le ou chaque élément de fixation complémentaire 17 du pack batterie 3 est configuré pour coopérer avec l'élément mâle 11 d'un autre pack batterie latéralement adjacent audit pack batterie 3 et disposé en regard de la deuxième cloison latérale 5d, ou avec un élément mâle monté sur la cloison latérale 1d de l'enceinte.

Le ou chaque élément de fixation complémentaire 17 est ainsi disposé sur la deuxième cloison latérale 5d de manière à pouvoir venir en prise avec un élément mâle d'un autre pack batterie ou monté sur la cloison latérale 1d de l'enceinte 1.

Plus particulièrement, chaque élément de fixation complémentaire 17 occupe une position, sur la deuxième cloison latérale 5d, sensiblement symétrique à la position d'un élément mâle 11 par rapport à un plan latéral médian du coffre 5.

Dans l'exemple illustré, les éléments de fixation complémentaires 17 sont en forme de crochet et comprennent chacun une portion intermédiaire 19 et une portion de blocage 21. La portion intermédiaire 19 fait saillie depuis la deuxième cloison latérale 5d orthogonalement à celle-ci, et la portion de blocage 21 s'étend orthogonalement à la portion intermédiaire 19 depuis l'extrémité latérale de la portion intermédiaire 19.

Dans l'exemple illustré, les éléments de fixation complémentaires 17 sont ainsi au nombre de quatre, dont seuls deux sont visibles sur la figure 2. En effet, le pack batterie 3 comprend deux premiers éléments de fixation complémentaires 17a alignés le long de la deuxième cloison latérale 5d selon une direction longitudinale, et deux seconds éléments de fixation complémentaires 17b, disposés sur la deuxième cloison latérale 5d dans l'alignement vertical des deux premiers éléments de fixation complémentaires 17a.

La portion de blocage 21 de chaque élément de fixation complémentaire 17 s'étend dans une direction opposée à celle de la portion de blocage 15 de l'élément mâle 11 lui faisant face sur la première cloison latérale 5c. Ainsi, dans l'exemple illustré, les portions de blocage 15 des éléments mâles 11 s'étendent vers l'avant, tandis que les portions de blocage 21 des éléments de fixation complémentaire 17 s'étendent vers l'arrière.

Dans ce mode de réalisation, et comme décrit plus en détails ci-après, dans sa position déverrouillée, l'élément mâle 11 fait saillie vers l'extérieur du coffre 5 à une première distance de la première cloison latérale 5c, et fait saillie vers l'extérieur du coffre 5 à une deuxième distance de la première cloison latérale 5c dans sa position verrouillée, la deuxième distance étant strictement inférieure à la première distance. Le mécanisme d'actionnement est ainsi configuré pour opérer un mouvement de translation de l'élément mâle 11 depuis sa position déverrouillée vers sa position verrouillée selon une direction de translation orthogonale à la première cloison latérale 5c.

Ainsi, dans la position verrouillée, la portion de blocage 15 de chaque élément mâle 11 est propre à exercer une force de traction sur la portion de blocage 21 d'un élément de fixation complémentaire 17, empêchant tout mouvement transversal des coffres l'un par rapport à l'autre.

On a illustré sur la figure 3 un ensemble de deux packs batterie 3, qui sont chacun réalisés selon le premier mode de réalisation de l'invention tel qu'illustré sur la figure 2.

Les deux packs batterie 3 sont fixés l'un à l'autre au moyen de leurs systèmes d'accorage latéral 7. Plus particulièrement, chaque élément mâle 11 d'un premier des deux packs batterie est dans sa position verrouillée, et est en prise avec un élément de fixation complémentaire 17 de l'autre pack batterie.

Le système d'accorage latéral 7 est décrit plus en détails sur les figures 4 et 5.

La figure 4 est une vue en coupe partielle selon un plan longitudinal du pack batterie de la figure 2. Sont ainsi visibles sur la figure 4 une partie des première 5c et deuxième cloisons latérales, ainsi qu'un premier organe de verrouillage 9a et un premier élément de fixation complémentaire 17a.

La figure 5 est une vue en coupe partielle du pack batterie selon le plan transversal V-V de la figure 4.

Sont ainsi visibles sur la figure 5 une partie de la première cloison latérale, ainsi qu'un premier organe de verrouillage 9a et un deuxième organe de verrouillage 9b.

On a par ailleurs illustré sur les figure 4 et 5 le mécanisme d'actionnement 30 de chaque élément mâle 11 depuis sa position déverrouillée jusqu'à sa position verrouillée.

L'organe de verrouillage 9 comprend, outre l'élément mâle 11, une portion d'actionnement 32. La portion d'actionnement 32 est disposée à l'intérieur du coffre 5. L'élément mâle 11 fait saillie depuis la portion d'actionnement 32 vers l'extérieur du coffre 5. La portion d'actionnement 32 et l'élément mâle 11 sont solidaires l'un de l'autre. Par exemple, la portion d'actionnement et l'élément mâle 11 sont venus de matière.

Le mécanisme d'actionnement 30 comprend une vis 34 et un élément actionneur 36.

La vis 34 s'étendant selon un axe de vis A-A sensiblement parallèle à la première cloison latérale 5c. En particulier, l'axe de vis A-A est un axe vertical.

De préférence, la vis 34 fait saillie de la cloison supérieure 5e, comme visible sur la figure 2, de manière à permettre à un opérateur d'actionner la vis 34 en rotation.

L'élément actionneur 36 est monté en prise avec le filetage de la vis 34. Notamment, l'élément actionneur 36 comprend un alésage fileté, dont le filetage est complémentaire à celui de la vis 34.

La vis 34 est montée de manière fixe en translation selon son axe A-A et l'élément actionneur 36 est monté fixe en rotation autour de l'axe de vis A-A. Dès lors, une rotation de la vis 34 dans un sens de verrouillage, par exemple dans le sens horaire, autour de son axe A-A, entraîne une translation de l'élément actionneur 36 selon l'axe de vis A-A dans une direction de verrouillage DV1.

L'élément actionneur 36 comprend une surface d'actionnement 38 propre à coopérer avec la portion d'actionnement 32 de l'organe de verrouillage 9, de telle sorte que la translation de l'élément actionneur 36 dans la direction de verrouillage DV1 entraîne un actionnement de l'élément mâle 9 vers sa position verrouillée.

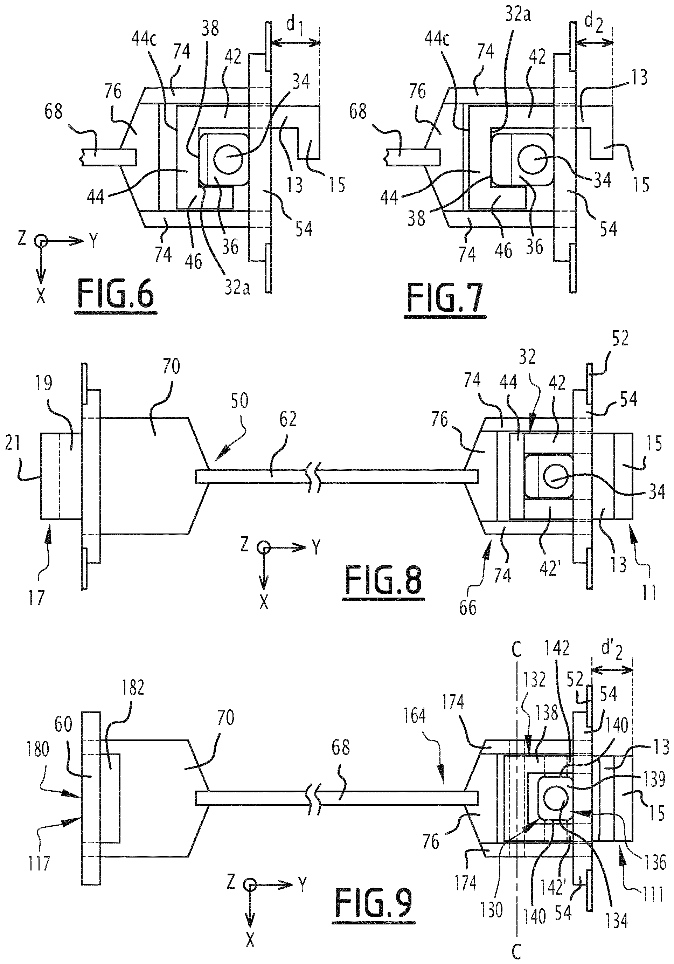

Plus particulièrement, comme illustré sur les figures 6 et 7, l'élément mâle 11 fait saillie depuis la portion d'actionnement 32 vers l'extérieur du coffre 5 à une première distance d1 de la première cloison latérale 5c dans sa position déverrouillée, et fait saillie depuis la portion d'actionnement 32 vers l'extérieur du coffre à une deuxième distance d2 de la première cloison latérale 5c dans sa position verrouillée, la deuxième distance d2 étant strictement inférieure à la première distance d1.

Le mécanisme d'actionnement 30 est ainsi configuré pour opérer un mouvement de translation de l'élément mâle 11 depuis sa position déverrouillée vers sa position verrouillée selon une direction de translation TV orthogonale à la première cloison latérale 5c, à l'écart de l'axe de vis A-A, c'est-à-dire vers l'intérieur du coffre 5.

Dès lors, la translation de l'élément actionneur 36 dans la direction de verrouillage DV1 est destinée à entraîner une translation de la portion d'actionnement 32 selon la direction de translation TV, et ainsi une translation de l'élément mâle 9 vers sa position verrouillée.

A cette fin, la portion d'actionnement 32 est par exemple montée fixe en translation selon l'axe de vis A-A, et mobile en translation selon la direction de translation TV.

En particulier, la portion d'actionnement 32 comprend une première surface 32a formant un angle α non nul avec l'axe de vis A-A, la surface plane 32a étant orientée vers l'axe de vis A-A dans la direction de verrouillage DV1.

La première surface 32a est par exemple une surface plane.

Par ailleurs, la surface d'actionnement 38 de l'élément actionneur 36 est une deuxième surface formant un angle α, de même valeur que l'angle α entre la première surface 32a et l'axe de vis A-A. Ainsi, la surface d'actionnement 38 est orientée vers l'axe de vis A-A dans la direction de verrouillage DV1.

La surface d'actionnement 38 est de forme complémentaire à la première surface 32a. Par exemple, la première surface 32a et la surface d'actionnement 38 sont des surfaces planes. La première surface 32a et la surface d'actionnement 38 sont en contact l'une de l'autre.

Dès lors, une translation de l'élément actionneur 36 dans la direction de verrouillage DV1 est propre à entraîner une translation de la portion d'actionnement 32, donc de l'organe de verrouillage 9, à l'écart de l'axe de vis A-A selon la direction de translation TV, par contact entre la première surface 32a et la surface d'actionnement 38.

Plus spécifiquement, dans l'exemple illustré sur les figures 4 à 7, l'élément actionneur 36 a une section transversale de forme trapézoïdale. Cette section transversale est définie par deux surfaces longitudinales 36a, 36b, par une surface distale 36c, qui est par exemple parallèle à la première cloison latérale 5c, et par la surface d'actionnement 38, qui est inclinée vers l'axe de vis A-A selon la direction d'actionnement DV1.

Par exemple, la surface distale 36c prend appui contre une surface interne de la première cloison latérale 5c, empêchant ainsi tout mouvement de translation de l'élément actionneur 36 à l'écart de la direction de translation TV.

Par ailleurs, la portion d'actionnement 32 de l'organe de verrouillage 9 comprend une partie de support 42 de l'élément mâle 11, une partie actionnable 44 et une partie de maintien 46.

La partie de support 42 s'étend dans une direction orthogonale à la première cloison latérale 5c, dans le prolongement de la portion intermédiaire 13 de l'élément mâle 9.

La partie actionnable 44 s'étend, selon une coupe longitudinale, orthogonalement à la partie de support 42. La partie actionnable 44 comprend la première surface 32a. En particulier, comme illustré sur la figure 5, la partie actionnable 44 a une section transversale de forme trapézoïdale. Cette section est définie par deux surfaces longitudinales 44a, 44b, par une surface distale 44c, qui est par exemple parallèle à la première cloison latérale 5c, et par la première surface 32a, qui est inclinée vers l'axe de vis A-A selon la direction d'actionnement DV1.

La partie de maintien 46 s'étend, selon une coupe longitudinale, orthogonalement à la partie actionnable 42, en direction de la première cloison latérale 5c.

La partie de maintien 46 et la partie actionnable 44 enserrent l'élément actionneur 36 latéralement et longitudinalement.

En particulier, l'élément actionneur 36 est enserré latéralement entre la partie actionnable 44 et la surface interne de la première cloison latérale 5c.

Dans l'exemple illustré sur les figures 4 à 7, le pack batterie 3 comprend en outre un ensemble de renfort 50. Cet ensemble de renfort 50 est destiné notamment à assurer la tenue mécanique de l'organe de verrouillage 9 et du mécanisme d'actionnement 30 avec la première cloison latérale 5c. De préférence, l'ensemble de renfort 50 est configuré pour maintenir la portion d'actionnement 32 dans une position fixe en translation selon l'axe de vis A-A.

De préférence, l'ensemble de renfort 50 est également destiné à assurer la tenue mécanique de l'organe de verrouillage 9, de l'élément de fixation complémentaire 17 et du mécanisme d'actionnement 30 avec la première cloison latérale 5c et la deuxième cloison latérale 5d.

Dans l'exemple illustré sur les figures 4 et 5, la première cloison latérale 5c comprend une première cloison principale 52 et un premier renfort de cloison 54.

La première cloison principale 52 comprend un premier dégagement 56 dans lequel est reçu le premier renfort de cloison 54. Le premier dégagement 56 s'étend verticalement du premier organe de verrouillage 9a au deuxième organe de verrouillage 9b. Ainsi, le premier renfort de cloison 54 s'étend également verticalement du premier organe de verrouillage 9a au deuxième organe de verrouillage 9b, en occultant le premier dégagement 56. Le premier renfort de cloison 54 comprend un orifice destiné au passage de l'élément mâle 11 depuis l'intérieur du coffre vers l'extérieur du coffre.

De même, la deuxième cloison latérale 5d comprend une deuxième cloison principale 58 et un deuxième renfort de cloison 60.

La deuxième cloison principale 58 comprend un deuxième dégagement 62 dans lequel est reçu le deuxième renfort de cloison 60. Le deuxième dégagement 62 s'étend verticalement du premier élément de fixation complémentaire 17a au deuxième élément de fixation complémentaire 17b. Ainsi, le deuxième renfort de cloison 60 s'étend également verticalement du premier élément de fixation complémentaire 17a au deuxième élément de fixation complémentaire 17b, en occultant le deuxième dégagement 62.

Le premier et le deuxième éléments de fixation complémentaires 17a sont fixés sur le deuxième renfort de cloison 60. Par exemple, le premier et le deuxième éléments de fixation complémentaires 17a sont venus de manière avec le deuxième renfort de cloison 60.

L'ensemble de renfort 50 comprend, outre les renforts de cloison 54, 60, un renfort structurel 64. Le renfort structurel 64 s'étend transversalement à l'intérieur du coffre 5, depuis le premier renfort de cloison 54 jusqu'au deuxième renfort de cloison 60, et fixe ainsi les renforts de cloison 54, 60 l'un à l'autre.

Le renfort structurel 64 comprend par exemple, depuis son extrémité fixée au premier renfort de cloison 54 jusqu'à son extrémité fixée au deuxième renfort de cloison 60, une première portion d'extrémité 66, une tige 68 et une deuxième portion d'extrémité 70.

La première portion d'extrémité 66 est fixée au premier renfort de cloison 54. La première portion d'extrémité 66 est configurée pour assurer la tenue mécanique de l'organe de verrouillage 9 et du mécanisme d'actionnement 30 avec la première cloison latérale 5c, et pour maintenir la portion d'actionnement 32 dans une position fixe en translation selon l'axe de vis A-A dans la direction de verrouillage DV1.

La première portion d'extrémité 66 comprend à cette fin une paroi longitudinale 72, fixée orthogonalement au premier renfort de cloison 54. La portion d'actionnement 32 prend appui verticalement contre cette paroi longitudinale 72, et est ainsi maintenue dans une position fixe en translation selon l'axe de vis A-A dans la direction de verrouillage DV1.

La première portion d'extrémité 66 comprend en outre deux parois transversales 74 s'étendant transversalement à l'écart de la première cloison latérale 5c de part et d'autre de la portion d'actionnement 32.

La première portion d'extrémité 66 comprend par ailleurs une paroi latérale 76 sensiblement parallèle à la première cloison latérale 5c s'étendant d'un bord d'une des parois transversales 74 au bord de l'autre paroi transversale 74.

Dans la position déverrouillée, la paroi latérale 76 s'étend à distance, selon une direction transversale, de la surface distale 44c de la partie actionnable 44, de manière à autoriser une translation de la partie actionnable dans la direction TV.

Cette distance est par exemple supérieure à la différence entre la première distance d1 et la deuxième distance d2. Dans ce cas, dans la position verrouillée, la paroi latérale 76 reste à distance, selon la direction transversale, de la surface distale 44c de la partie actionnable 44.

En variante, cette distance est égale à la différence entre la première distance d1 et la deuxième distance d2. Dans ce cas, dans la position verrouillée, la surface distale 44c de la partie actionnable 44 est en appui contre la paroi latérale 76.

La deuxième portion d'extrémité 70 est fixée au deuxième renfort de cloison 60. La tige 72 est fixée à sa première extrémité à la paroi latérale 76 de la première portion d'extrémité 66, et à sa deuxième extrémité à la deuxième portion d'extrémité 70.

Comme illustré sur la figure 5, l'ensemble de renfort 50 comprend deux renforts structurels 64 s'étendant chacun transversalement à l'intérieur du coffre 5, depuis le premier renfort de cloison 54 jusqu'au deuxième renfort de cloison 60, et fixant les renforts de cloison 54, 60 l'un à l'autre.

En particulier, un premier renfort structurel 64 assure la tenue mécanique d'un premier organe de verrouillage 9a et du mécanisme d'actionnement 30 avec la première cloison latérale 5c, et un deuxième renfort structurel 64 assure la tenue mécanique d'un deuxième organe de verrouillage 9b et du mécanisme d'actionnement 30 avec la première cloison latérale 5c.

En outre, dans le mode de réalisation illustré sur les figures 2 à 7, le pack batterie 3 comprend deux premiers organes de verrouillages 9a et deux seconds organes de verrouillage 9b.

Dès lors, la première cloison latérale 5c comprend deux premiers dégagements 56 et deux premiers renforts de cloison 54 s'étendant chacun verticalement d'un premier organe de verrouillage 9a à un deuxième deuxième organe de verrouillage 9b. De même, la deuxième cloison latérale 5d comprend deux deuxièmes dégagements 62 et deux deuxièmes renforts de cloison 60, s'étendant verticalement d'un premier élément de fixation complémentaire 17a à un deuxième élément de fixation complémentaire 17b. L'ensemble de renfort 50 comprend par conséquent quatre renforts structurels 64.

Comme illustré sur la Figure 7, la vis 34 est par exemple montée de manière fixe en translation selon son axe A-A au moyen d'un palier de vis 80 monté sur une extrémité de la vis 34. En particulier, le palier de vis 80 est monté sur l'extrémité de la vis 34 dans la direction de verrouillage DV1.

De préférence, la vis 34 du mécanisme d'actionnement 30 du premier organe de verrouillage 9a et la vis 34 du mécanisme d'actionnement 30 du deuxième organe de verrouillage 9b sont montées de manière fixe en translation selon leur axe A-A au moyen d'un unique palier de vis 80.

Ce palier de vis 80 est de préférence fixé à la première cloison latérale 5c, notamment au premier renfort de cloison 54.

Avantageusement, le palier de vis 80 est configuré pour entrainer la rotation de la vis 34 du mécanisme d'actionnement 30 du deuxième organe de verrouillage 9b lorsque la vis 34 du mécanisme d'actionnement 30 du premier organe de verrouillage 9a est mise en rotation.

De la sorte, une rotation de la vis 34 entraine les éléments mâles 11 des deux organes de verrouillage 9a et 9b dans leur position verrouillée.

On va maintenant décrire l'accorage latéral de deux pack batterie 3 selon le premier mode de réalisation.

Les organes de verrouillage 9 étant en position déverrouillée, on positionne les packs batterie 3 latéralement l'un contre l'autre, de telle sorte que les éléments mâles 11 d'un premier des packs batterie 3 s'emboitent dans les éléments de fixation complémentaire 17 du deuxième pack batterie.

On actionne alors les organes de verrouillage 9 jusqu'à leur position verrouillée par la mise en rotation des vis 34. Lorsque chaque vis 34 est entrainée en rotation autour de son axe A-A, par exemple par un opérateur, la vis 34 entraîne l'élément actionneur 36 en translation selon l'axe de vis A-A dans la direction de verrouillage DV1.

La surface d'actionnement 38 de l'élément actionneur 36, en appui contre la première surface 32a de la portion d'actionnement 32, est déplacée selon la direction de verrouillage DV1, entraînant une translation de la portion d'actionnement 32 selon la direction de translation TV, et ainsi une translation de l'élément mâle 9 vers sa position verrouillée.

L'élément mâle 9 serre alors l'élément de fixation complémentaire 17 contre la première cloison latérale 5c.

Selon une variante du premier mode de réalisation, illustrée sur la figure 8, la portion de blocage 15 de l'élément mâle 11 s'étend selon une direction verticale depuis un bord latéral de la portion intermédiaire 13, au moins dans la position verrouillée de l'élément mâle 11. Par exemple, la portion de blocage 15 s'étend vers le haut à partir du bord latéral de la portion intermédiaire 13.

Selon cette variante, la portion d'actionnement 32 de l'organe de verrouillage 9 comprend une première partie de support 42 de l'élément mâle 11, une deuxième partie de support 42' de l'élément mâle 11 et la partie actionnable 44.

Chaque partie de support 42, 42' s'étend dans une direction orthogonale à la première cloison latérale 5c, dans le prolongement de la portion intermédiaire 13 de l'élément mâle 9, entre la première cloison latérale 5c et la partie actionnable 44.

La partie actionnable 44 s'étend, en coupe longitudinale, orthogonalement aux parties de support 42, 42'.

Les parties de support 42, 42' enserrent ainsi l'élément actionneur 36 longitudinalement.

Par ailleurs, l'élément mâle 11 s'étend, dans une direction longitudinale, depuis la première partie de support 42 jusqu'à la deuxième partie de support 42'.

De même, dans cette variante, l'élément de fixation complémentaire 17 est tel que sa portion de blocage 21 s'étend verticalement depuis un bord latéral de la portion intermédiaire 19, notamment vers le bas.

On va maintenant décrire, en référence aux figures 9 à 11, un pack batterie selon un deuxième mode de réalisation de l'invention.

Les éléments identiques par rapport au premier mode de réalisation ne sont pas répétés. Seules les différences entre ces modes de réalisation sont mises en évidence. En particulier, ce deuxième mode de réalisation diffère du premier mode de réalisation décrit ci-dessus essentiellement en ce que l'organe de verrouillage 109 comprend un élément mâle 111 actionnable de sa position déverrouillée à sa position verrouillée par un mouvement de rotation.

En outre, comme dans la variante du mode de réalisation décrit en référence à la figure 8, la portion de blocage 15 de l'élément mâle 111 s'étend verticalement, vers le haut ou vers le bas, depuis la portion intermédiaire 13, au moins dans la position verrouillée de l'élément mâle 111.

Dans la position déverrouillée, illustrée sur les figures 10 et 11, l'élément mâle 111 est au moins partiellement reçu dans un évidement de la première cloison latérale 5c, de telle sorte que l'élément mâle 111 fait saillie vers l'extérieur du coffre 5 à une première distance d1' de la première cloison latérale 5c. En variante, l'élément mâle 111 est entièrement reçu dans l'évidement de la première cloison latérale 5c et ne fait pas saillie à l'extérieur du coffre 5.

Dans la position verrouillée, illustrée sur la figure 9, l'élément mâle 111, en particulier sa portion intermédiaire 13, fait saillie depuis la première cloison latérale 5c orthogonalement à celle-ci, et la portion de blocage 15 s'étend orthogonalement à la portion intermédiaire 13, verticalement depuis l'extrémité latérale de la portion intermédiaire 13. Plus particulièrement, l'élément mâle 111 fait saillie vers l'extérieur du coffre 5 à une deuxième distance d2' de la première cloison latérale 5c, la deuxième distance d2' étant strictement supérieure à la première distance d1'.

Ainsi, dans le deuxième mode de réalisation, le mécanisme d'actionnement 130 est configuré pour opérer un mouvement de rotation de l'élément mâle 111 autour d'un axe de rotation parallèle à la première cloison, de sa position déverrouillée à sa position verrouillée.

En particulier, dans la position verrouillée, la portion de blocage 15 s'étend selon une direction longitudinale, parallèlement à la première cloison latérale 5c. En revanche dans la position déverrouillée, la portion de blocage 15 forme un angle β non nul avec la première cloison latérale 5c. La valeur absolue de l'angle β est inférieure ou égale à 90°. De préférence, la valeur absolue de l'angle β est comprise entre 20° et 80°.

Dans l'exemple illustré, le premier 109a et le deuxième 109b organes de verrouillages sont tels que la portion de blocage 15 de leurs éléments mâles 111 forment avec la première cloison latérale 5c, dans leur position déverrouillée, deux angles opposés β et - β.

En variante, les éléments mâles 111 sont orientés dans le même sens, leur portion de blocage 15 formant avec la première cloison latérale 5c un même angle β dans la position déverrouillée.

L'organe de verrouillage 109 comprend, outre l'élément mâle 111, une portion d'actionnement 132. La portion d'actionnement 132 est disposée à l'intérieur du coffre 5. L'élément mâle 111 fait saillie depuis la portion d'actionnement 132 vers l'extérieur du coffre 5. La portion d'actionnement 132 et l'élément mâle 111 sont solidaires l'un de l'autre. Par exemple, la portion d'actionnement 132 et l'élément mâle 111 sont venus de matière.

Le mécanisme d'actionnement 130 comprend une vis 134 et un élément actionneur 136.

La vis 134 s'étendant selon un axe de vis B-B sensiblement parallèle à la première cloison latérale 5c. En particulier, l'axe de vis B-B est un axe vertical.

L'élément actionneur 136 est monté en prise avec le filetage de la vis 134. Notamment, l'élément actionneur 136 comprend un alésage fileté, dont le filetage est complémentaire à celui de la vis 134.

Comme dans le premier mode de réalisation, la vis 134 est montée de manière fixe en translation selon son axe B-B et l'élément actionneur 136 est monté fixe en rotation autour de l'axe de vis B-B. Dès lors, une rotation de la vis 134 dans un sens de verrouillage, par exemple dans le sens horaire, autour de son axe B-B, entraîne une translation de l'élément actionneur 136 selon la direction de l'axe de vis B-B dans une direction de verrouillage.

L'élément actionneur 136 comprend une surface d'actionnement 138 propre à coopérer avec la portion d'actionnement 132 de l'organe de verrouillage 109, de telle sorte que la translation de l'élément actionneur 136 dans la direction de verrouillage entraîne une rotation de l'élément mâle 111 vers sa position verrouillée.

En particulier, l'élément actionneur 136 comprend un corps 139 comprenant l'alésage fileté complémentaire à celui de la vis 134, et au moins un ergot 140. Le ou chaque ergot 140 fait saillie depuis le corps 139 orthogonalement à l'axe de vis. Le ou chaque ergot 140 définit la surface d'actionnement 138. En particulier, la surface d'actionnement 138 est formée par la surface périphérique de l'ergot 140.

Dans l'exemple illustré, l'élément actionneur 136 comprend deux ergots 140, orthogonaux à l'axe de vis B-B, faisant saillie depuis le corps 139 orthogonalement à l'axe de vis B-B, de part et d'autre du corps 139. Les deux ergots 140 définissent deux surfaces d'actionnement 138.

La portion d'actionnement 132 de l'organe de verrouillage 109 est montée mobile en rotation autour d'un axe de pivot C-C orthogonal à l'axe de vis B-B. La portion d'actionnement 132 est fixe en translation selon l'axe de vis B-B.

La portion d'actionnement 132 définit au moins une gorge 141 dans laquelle est reçu l'ergot 140.

Dans l'exemple illustré, la portion d'actionnement 132 définit deux gorges 141 dans chacune desquelles est reçu un ergot 140 respectif.

En particulier, la portion d'actionnement 132 de l'organe de verrouillage 109 comprend une première partie actionnable 142, une deuxième partie actionnable 142' et une base 144.

Les parties actionnables 142, 142' forment des parois transversales enserrant l'élément actionneur 136.

Chaque partie actionnable 142, 142' comprend une première branche 143 et une deuxième branche 145 parallèles l'une à l'autre selon une coupe transversale et définissant une gorge 141 respective. L'élément mâle 111 s'étend dans le prolongement des premières branches 143 des parties actionnables 142, 142'. En particulier, l'élément mâle 111 s'étend, dans une direction longitudinale, depuis la première branche 143 de la première partie de support 142 jusqu'à la première branche 143 de la deuxième partie de support 142'.

Les première et deuxième parties actionnables 142, 142' font saillie depuis la base 144 parallèlement l'une à l'autre, de part et d'autre de la base 144. Par ailleurs, les première et deuxième branches 143, 145 de chaque partie actionnable 142, 142' font saillie depuis la base 144 parallèlement l'une à l'autre.

La base 144 comprend une tige de pivot 147 fixe, centrée sur l'axe de pivot C-C, la tige de pivot 147 passant à travers un alésage longitudinal réalisé dans la base 144. La base 144 étant ainsi mobile en rotation autour de son axe de pivot C-C.

De la sorte, la translation de l'élément actionneur 136 dans la direction de verrouillage entraîne une rotation de la portion d'actionnement 132 autour de son axe de pivot C-C. En particulier, lors de la translation de l'élément actionneur 136, les ergots 140 exercent une force selon la direction de verrouillage sur les premières branches 143, entrainant la rotation de la portion d'actionnement 132 autour de l'axe de pivot C-C.

Une telle rotation entraîne de fait une rotation correspondante de l'élément mâle 111 autour de l'axe de pivot C-C de sa position déverrouillée vers sa position verrouillée.

L'ensemble de renfort 150 selon ce deuxième mode de réalisation diffère de l'ensemble de renfort 50 selon le premier mode de réalisation en ce que les parois transversales 174 de la première portion d'extrémité 166 du renfort structurel 164 comprennent chacune un alésage longitudinal dans lequel est reçu une extrémité respective de la tige de pivot 147. De préférence, la tige de pivot est maintenue dans une position fixe par rapport au renfort structurel 164.

Enfin, l'élément de fixation complémentaire 117 selon ce deuxième mode de réalisation diffère de l'élément de fixation complémentaire 17 selon le premier mode de réalisation en ce qu'il comprend une empreinte 180 formée par un évidement réalisé dans la deuxième cloison latérale 5d. En particulier, l'empreinte 180 est réalisée dans la deuxième cloison de renfort 60. De préférence, comme illustré sur la figure 9, la deuxième portion d'extrémité 70 forme alors un décrochement 182 délimitant un évidement de taille adaptée au passage de l'élément mâle 111.

On va maintenant décrire l'accorage latéral de deux packs batterie 3 selon le deuxième mode de réalisation.

Les organes de verrouillage 109 étant en position déverrouillée, on positionne les packs batterie 3 latéralement l'un contre l'autre, de telle sorte que les éléments mâles 111 d'un premier des packs batterie 3 s'emboitent dans les éléments de fixation complémentaire 117, en particulier dans les empreintes 180 du deuxième pack batterie.

On actionne alors les organes de verrouillage 109 jusqu'à leur position verrouillée par la mise en rotation des vis 134. Lorsque chaque vis 134 est entrainée en rotation autour de son axe B-B, par exemple par un opérateur, la vis 134 entraîne l'élément actionneur 136 en translation parallèlement à l'axe de vis B-B dans la direction de verrouillage.

La surface d'actionnement 138 de l'élément actionneur 136, en particuliers les argots 140, exercent alors une force selon la direction de verrouillage sur les premières branches 143, entrainant la rotation de la portion d'actionnement 132 autour de l'axe de pivot C-C. Une telle rotation entraîne de fait une rotation correspondante de l'élément mâle 111 autour de l'axe de pivot C-C de sa position déverrouillée vers sa position verrouillée.

L'élément mâle 109 s'insère ainsi dans l'empreinte 180 et vient en prise contre la surface interne de l'empreinte 180, serrant ainsi les deux packs batteries latéralement.

On comprend ainsi que le système d'accorage dont est muni le pack batterie selon le premier ou le deuxième mode de réalisation décrit ci-dessus permet de fixer latéralement les packs batterie les uns aux autres, en empêchant tout mouvement transversal des packs batterie les uns par rapport aux autres.

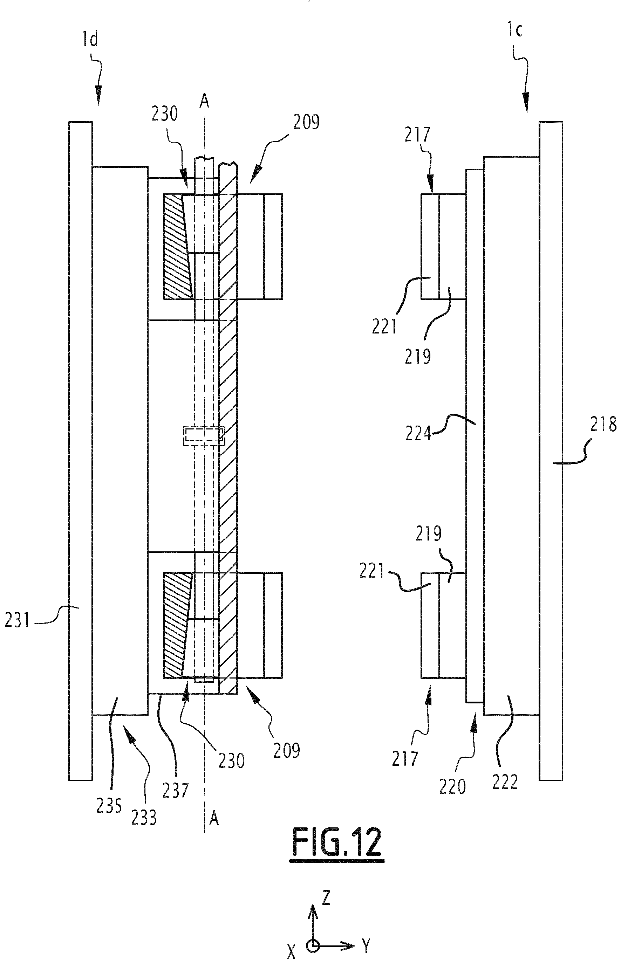

De préférence, comme illustré à titre d'exemple sur la figure 12, les parois latérales 1c et 1d sont également munies d'un système d'accorage des packs batterie.

Notamment, la première paroi latérale 1c de l'enceinte 1, destinée à être orientée vers la première paroi latérale 5c d'un pack batterie 3, comprend au moins un élément de fixation complémentaire 217 à l'élément mâle 11.

De préférence, la deuxième paroi latérale 1d de l'enceinte 1, destinée à être orientée vers la deuxième paroi latérale 5d d'un pack batterie 3, comprend au moins un organe de verrouillage 209 et un mécanisme d'actionnement 230 de l'élément mâle de l'organe de verrouillage 209.

Le ou chaque élément de fixation complémentaire 217 est de préférence monté de manière fixe sur la première paroi latérale 5c.

Le ou chaque élément de fixation complémentaire 217 est configuré pour coopérer avec l'élément mâle 11 ou 111 d'un pack batterie 3 latéralement adjacent à la première paroi latérale 1c, et disposé en regard de la première paroi latérale 1c.

Le ou chaque élément de fixation complémentaire 217 est ainsi disposé sur la première paroi latérale 1c de manière à pouvoir venir en prise avec un élément mâle 11 ou 111 d'un pack batterie 3.

Le ou chaque élément de fixation complémentaire 217 est par exemple un élément de fixation complémentaire 17 selon le premier mode de réalisation, ou un élément de fixation complémentaire 117 selon le deuxième mode de réalisation.

Le ou chaque organe de verrouillage 209 est configuré pour coopérer avec l'élément de fixation complémentaire 17 ou 117 d'un pack batterie 3 latéralement adjacent à la deuxième paroi latérale 1d et disposé en regard de la deuxième paroi latérale 1d.

Le ou chaque organe de verrouillage 209 est ainsi disposé sur la deuxième paroi latérale 1d de manière à pouvoir venir en prise avec un élément de fixation complémentaire 17 ou 117 d'un pack batterie 3.

Le ou chaque organe de verrouillage 209 est par exemple un organe de verrouillage 9 selon le premier mode de réalisation, ou un organe de verrouillage 109 selon le deuxième mode de réalisation.

On a ainsi illustré sur la figure 12 deux parois latérales 1c, 1d de l'enceinte 1, munies d'un système d'accorage latéral de packs batterie.

En particulier, la première paroi latérale 1c est munie d'une pluralité d'éléments de fixation complémentaires 217 selon le premier mode de réalisation.

Les éléments de fixation complémentaires 217 sont ainsi en forme de crochet, et comprennent chacun une portion intermédiaire 219 et une portion de blocage 221.

Dans l'exemple illustré, la première paroi latérale 1c comprend une paroi principale 218, et un ensemble de renfort 220 comprenant un premier renfort 222 fixé sur la face interne de la paroi principale 218 et un deuxième renfort 224 fixé sur la face interne du premier renfort 222.

Le premier renfort 222 est par exemple réalisé dans un matériau résilient élastomère. L'utilisation d'un tel matériau permet d'atténuer les éventuels chocs dus au mouvement du bâtiment naval, en absorbant une partie des forces transversales générées par ces chocs, et ainsi d'éviter une dégradation du système d'accorage des packs batterie et des packs batterie eux-mêmes.

Le deuxième renfort 224 est par exemple réalisé en un matériau métallique, notamment en acier.

Les éléments de fixation complémentaires 217 sont fixés à la première paroi latérale 1c, notamment au deuxième renfort 224.

Ainsi, la portion intermédiaire de chaque élément de fixation complémentaire 217 fait saillie depuis la première paroi latérale 1c, notamment depuis le deuxième renfort 224, orthogonalement à celle-ci, et la portion de blocage s'étend orthogonalement à la portion intermédiaire depuis l'extrémité latérale de la portion intermédiaire, par exemple vers le haut.

Par ailleurs, dans l'exemple illustré, la deuxième paroi latérale 1d est munie d'une pluralité d'organes de verrouillage 209 selon le premier mode de réalisation.

Dans l'exemple illustré, la deuxième paroi latérale 1d comprend une paroi principale 231, et un ensemble de renfort 233 comprenant un premier renfort 235 fixé sur la face interne de la paroi principale 231 et un deuxième renfort 237 fixé sur la face interne du premier renfort 235.

Le premier renfort 235 est par exemple réalisé dans un matériau résilient élastomère.

Le deuxième renfort 237 est similaire à la première portion d'extrémité 66 de l'ensemble de renfort 50. En particulier, la deuxième renfort 237 est configuré pour assurer la tenue mécanique de l'organe de verrouillage 209 et du mécanisme d'actionnement 230 avec la deuxième paroi latérale 5d, et pour maintenir la portion d'actionnement 232 de l'organe de verrouillage 209 dans une position fixe en translation selon l'axe de vis A-A dans la direction de verrouillage DV1.

Le système d'accorage des parois latérales de l'enceinte permet ainsi de fixer latéralement les packs batterie aux parois latérales, en empêchant tout mouvement transversal des packs batterie par rapport aux parois latérales et/ou les uns par rapport aux autres. En outre, le système d'accorage améliore l'alignement des packs entre eux et réduit les problèmes liés aux jeux mécaniques.

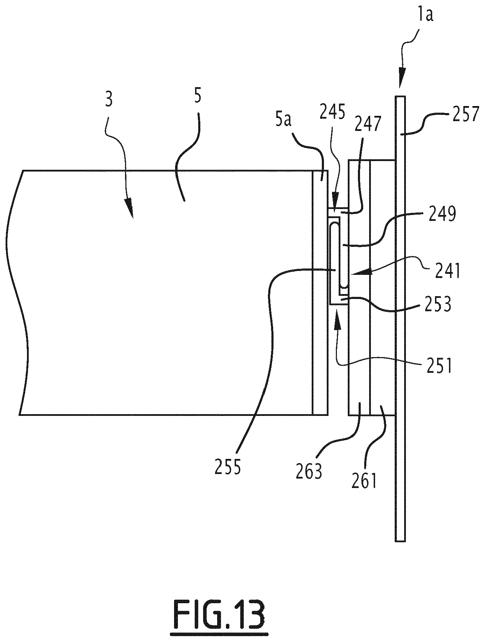

De préférence, le système d'accorage des packs batterie comprend en outre un système d'accorage longitudinal 241, illustré sur la figure 13.

Le système d'accorage longitudinal 241 est destiné à fixer le pack batterie à une paroi transversale 1a de l'enceinte, afin d'éviter tout mouvement longitudinal du pack batterie par rapport à cette paroi.

Le système d'accorage longitudinal 241 du pack batterie 3 comprend au moins un organe de verrouillage comprenant un élément mâle 245 en forme de crochet, monté sur une cloison transversale 5a, 5b du coffre 5, dans l'exemple illustré sur la première cloison transversale 5a.

L'élément mâle 245 est de préférence monté fixe sur la première cloison transversale 5a du coffre 5. Par exemple, l'élément mâle 245 est venu de matière avec la première cloison transversale 5a ou avec une partie de cette cloison 5a.

L'élément mâle 245 comprend une portion intermédiaire 247 et une portion de blocage 249. La portion intermédiaire 247 fait saillie depuis la première cloison transversale 5a orthogonalement à celle-ci, et la portion de blocage 249 s'étend orthogonalement à la portion intermédiaire 247 depuis l'extrémité longitudinale de la portion intermédiaire 249, parallèlement à la première cloison transversale 5a.

En particulier, dans le mode de réalisation de la figure 13, la portion de blocage 249 s'étend selon une direction verticale, vers le bas, depuis la portion intermédiaire 247.

Le système d'accorage longitudinal 241 comprend par ailleurs au moins un élément de fixation complémentaire 251 à l'élément mâle 245, fixé sur une paroi transversale de l'enceinte 1, dans l'exemple illustré sur la première paroi transversale 1a de l'enceinte. L'élément de fixation complémentaire 251 est configuré pour venir en prise avec l'élément mâle 245 par emboitement.

L'élément de fixation complémentaire 251 est, dans l'exemple illustré, en forme de crochet, de forme complémentaire à l'élément mâle 245.

L'élément de fixation complémentaire 251 comprend une portion intermédiaire 253 et une portion de blocage 255. La portion intermédiaire 253 fait saillie depuis la première paroi transversale 1a orthogonalement à celle-ci, et la portion de blocage 255 s'étend orthogonalement à la portion intermédiaire 253 depuis l'extrémité longitudinale de la portion intermédiaire 253.

En particulier, dans le mode de réalisation de la figure 13, la portion de blocage 255 s'étend selon une direction verticale, vers le haut, depuis la portion intermédiaire 253.

Dans l'exemple illustré, la première paroi transversale 1a comprend une paroi principale 257 et un ensemble de renfort comprenant un premier renfort 261 fixé sur la face interne de la paroi principale 257 et un deuxième renfort 263 fixé sur la face interne du premier renfort 261.

Le premier renfort 261 est par exemple réalisé dans un matériau résilient élastomère. L'utilisation d'un tel matériau permet d'atténuer les éventuels chocs dus au mouvement du bâtiment naval, en absorbant une partie des forces longitudinales générées par ces chocs, et ainsi d'éviter un endommagement du système d'accorage longitudinal 241 et des packs batterie eux-mêmes.

Le deuxième renfort 263 est par exemple réalisé en un matériau métallique, notamment en acier.

Le ou chaque élément de fixation complémentaire 251 est de préférence fixé au deuxième renfort 263.

De préférence, le jeu d'emboitement de l'élément mâle 245 et de l'élément de fixation complémentaire 251 est inférieur à 0,2 mm, afin d'éviter une déformation de ces éléments lors d'un choc.

De préférence, au moins l'un de l'élément mâle 245 et de l'élément de fixation complémentaire 251 comprend une pièce fusible, configurée pour se déformer ou se rompre lorsqu'un effort appliqué sur cette pièce est supérieur à un seuil d'effort prédéterminé. Par exemple, l'élément mâle 245 et/ou l'élément de fixation complémentaire 251 comporte une zone d'amorçage de pliage, par exemple une zone d'épaisseur moindre que sur le reste de l'élément mâle 245 et/ou de l'élément de fixation complémentaire 251, facilitant l'amorçage d'un pliage.

Le système d'accorage longitudinal 241 du pack batterie 3 comprend par exemple une pluralité d'organes de verrouillage comprenant un élément mâle 245 tels que décrits ci-dessus, fixés sur la première cloison transversale 5a du coffre 5. De même, le système d'accorage longitudinal 241 comprend une pluralité d'éléments de fixation complémentaires 251, fixés sur la première paroi transversale 1a, destinés à venir en prise avec la pluralité d'éléments mâle 245 d'un ou plusieurs packs batterie.

De préférence, le système d'accorage latéral 241 comprend en outre au moins un élément de fixation complémentaire, fixé sur la deuxième cloison transversale 5b du coffre 5. Cet élément de fixation complémentaire est configuré pour venir en prise avec l'élément mâle 245 d'un autre coffre, adjacent audit coffre 3 selon la direction longitudinale.

Un tel élément de fixation complémentaire est par exemple similaire à l'élément de fixation complémentaires 251 fixé sur la première paroi transversale 1a de l'enceinte. Il comprend ainsi une portion intermédiaire et une portion de blocage. La portion intermédiaire fait saillie depuis la deuxième cloison transversale 5b orthogonalement à celle-ci, et la portion de blocage s'étend orthogonalement à la portion intermédiaire depuis l'extrémité longitudinale de la portion intermédiaire.

Cet élément de fixation complémentaire est par exemple venu de matière avec la deuxième cloison transversale 5b, ou avec une partie de la deuxième cloison transversale 5b.

Par ailleurs, la deuxième paroi transversale 1b de l'enceinte comprend de préférence au moins un organe de verrouillage comprenant un élément mâle en forme de crochet, fixé sur la deuxième paroi transversale 1b de l'enceinte. Cet élément mâle est configuré pour venir en prise, par emboitement, avec l'élément de fixation complémentaire 251 du coffre 3.

Cet élément mâle est par exemple similaire à l'élément mâle 245, et comprend ainsi une portion intermédiaire et une portion de blocage.

La portion intermédiaire fait saillie depuis la deuxième paroi transversale 1b orthogonalement à celle-ci, et la portion de blocage s'étend orthogonalement à la portion intermédiaire depuis l'extrémité longitudinale de la portion intermédiaire, parallèlement à la deuxième paroi transversale 1b. En particulier, la portion de blocage s'étend selon une direction verticale, vers le haut, depuis la portion intermédiaire.

Par exemple, l'élément mâle est venu de matière avec la deuxième paroi transversale 1b ou avec une partie de cette paroi transversale 1b.

En particulier, selon un exemple, la deuxième paroi transversale 1b comprend une paroi principale, un premier renfort fixé sur la face interne de la paroi principale et un deuxième renfort fixé sur la face interne du premier renfort.

Le premier renfort est par exemple réalisé dans un matériau résilient élastomère. Le deuxième renfort est par exemple réalisé en un matériau métallique, notamment en acier.

Le ou chaque élément de fixation complémentaire est de préférence fixé au deuxième renfort, notamment venu de matière avec le deuxième renfort.

Le système d'accorage longitudinal 241 comprend par exemple une pluralité d'éléments de fixation complémentaires, fixés sur la deuxième paroi transversale 5b du coffre 5, et destinés à venir en prise avec une pluralité d'éléments mâle 245 de la première paroi transversale 5b d'un coffre adjacent ou avec une pluralité d'organes de verrouillage fixés sur la deuxième paroi transversale 1b de l'enceinte. De même, le système d'accorage longitudinal 241 comprend une pluralité d'organes de verrouillage fixés sur la deuxième paroi transversale 1b de l'enceinte 1 et destinés à venir en prise avec les éléments de fixation complémentaires fixés sur la deuxième paroi transversale 5b du coffre 5.

Le système d'accorage longitudinal permet ainsi de fixer latéralement les packs batterie aux parois transversales, en empêchant tout mouvement longitudinal des packs batterie par rapport aux parois transversales et/ou les uns par rapport aux autres. En outre, le système d'accorage longitudinal améliore l'alignement des packs entre eux et réduit les problèmes liés aux jeux mécaniques.

Il devra être compris que les exemples de réalisation présentés ci-dessus ne sont pas limitatifs.

En particulier, les premier et deuxième modes de réalisation décrits ci-dessus peuvent être combinés.

Notamment, selon une variante du premier mode de réalisation, l'élément de fixation complémentaire de la deuxième cloison latérale 5d du coffre 5 et/ou de la deuxième paroi latérale 1d de l'enceinte comprend une empreinte 180 formée par un évidement réalisé dans la deuxième cloison latérale 5d ou dans la deuxième paroi latérale 1d, comme décrit en référence au deuxième mode de réalisation.

Par ailleurs, selon une variante du deuxième mode de réalisation, l'élément de fixation complémentaire de la deuxième cloison latérale 5d du coffre 5 et/ou de la deuxième paroi latérale 1d de l'enceinte est un élément de fixation complémentaire 17 en forme de crochet tel que décrit en référence au premier mode de réalisation.

Par ailleurs, le nombre d'organes de verrouillage et/ou d'éléments de fixation complémentaires disposés sur les cloisons transversales 5c, 5d peut être différent de quatre, notamment compris entre un et huit.

En outre, selon des variantes du premier et deuxième modes de réalisation, la portion de blocage 15, 115 des éléments mâles 11, 111 de la première cloison latérale 5c du coffre et/ou de la deuxième paroi latérale 1d de l'enceinte s'étendent, depuis la portion intermédiaire 13, longitudinalement vers l'avant ou vers l'arrière, ou verticalement vers le haut ou vers le bas.

## Revendications

1. Pack batterie (3) d'un bâtiment naval, le pack batterie (3) comprenant un coffre (5) destiné à recevoir une pluralité d'accumulateurs, et un système d'accorage (7) amovible du coffre à une enceinte (1) du bâtiment naval, le système d'accorage (7) comprenant au moins un organe de verrouillage (9 ; 109) comprenant un élément mâle (11 ; 111) en forme de crochet, monté sur une première cloison (5c) du coffre (5), ledit élément mâle (11 ; 111) étant actionnable entre une position déverrouillée et une position verrouillée, ledit élément mâle (11 ; 111) étant configuré pour, dans sa position verrouillée, venir en prise avec un élément de fixation complémentaire (17 ; 117 ; 217) d'une première paroi (1c) de l'enceinte (1) ou d'une cloison (5d) d'un autre pack batterie disposée en regard de la première cloison (5c) du coffre (5), le système d'accorage (7) comprenant en outre un mécanisme d'actionnement (30 ; 130) de l'élément mâle (11 ; 111) depuis sa position déverrouillée jusqu'à sa position verrouillée,
l'organe de verrouillage (9 ; 109) comprenant une portion d'actionnement (32 ; 132), disposée à l'intérieur du coffre (5), ledit élément mâle (11 ; 111) faisant saillie depuis la portion d'actionnement (32 ; 132) vers l'extérieur du coffre (5) au moins dans sa position verrouillée
**caractérisé en ce que** le système d'accorage (7) comprend en outre un élément de fixation (17 ; 117) complémentaire audit élément mâle (11), disposé de manière fixe sur une deuxième cloison (5d) du coffre (5), opposée et parallèle à la première cloison (5c), l'élément de fixation complémentaire (17 ; 117) étant configuré pour coopérer avec l'élément mâle (11) d'un autre pack batterie disposé en regard de la deuxième cloison (5d).

2. Pack batterie (3) selon la revendication 1, dans lequel le mécanisme d'actionnement (30 ; 130) comprend une vis (34 ; 134) s'étendant selon un axe de vis (A-A ; B-B) sensiblement parallèle à la première cloison (5c) et un élément actionneur (36 ; 136) monté en prise avec un filetage de la vis (34 ; 134), la vis (34 ; 134) étant montée de manière fixe en translation selon son axe (A-A ; B-B) et l'élément actionneur (36 ; 136) étant monté fixe en rotation autour de l'axe de vis (A-A ; B-B) de sorte qu'une rotation de la vis (34 ; 134) dans un premier sens entraîne une translation de l'élément actionneur (36) selon l'axe de vis (A-A ; B-B) dans une direction de verrouillage (DV1), l'élément actionneur (36; 136) comprenant une surface d'actionnement (38 ; 138) propre à coopérer avec la portion d'actionnement (32 ; 132) de l'organe de verrouillage (9 ; 109) de telle sorte que la translation de l'élément actionneur (36; 136) dans la direction de verrouillage (DV1) entraîne un actionnement de l'élément mâle (11 ; 111) de sa position déverrouillée vers sa position verrouillée.

3. Pack batterie selon la revendication 1 ou 2, dans lequel ledit élément mâle (11 ) fait saillie vers l'extérieur du coffre (5) à une première distance (d1) de la première cloison (5c) dans sa position déverrouillée, et fait saillie vers l'extérieur du coffre (5) à une deuxième distance (d2) de la première cloison dans sa position verrouillée, la deuxième distance (d2) étant strictement inférieure à la première distance (d1), le mécanisme d'actionnement (30) étant configuré pour opérer un mouvement de translation de l'élément mâle (11) depuis sa position déverrouillée vers sa position verrouillée selon une direction (TV) orthogonale à la première cloison (5c).

4. Pack batterie (3) selon les revendications 2 et 3, dans lequel la portion d'actionnement (32) de l'organe de verrouillage (9) est montée fixe en translation selon l'axe de vis (A-A) et comprend une première surface (32a) formant un angle α non nul avec l'axe de vis (A-A), ladite première surface (32a) étant orientée vers l'axe de vis (A-A) dans la direction de verrouillage (DV1), la surface d'actionnement (38) de l'élément actionneur (36) est une deuxième surface formant ledit angle α avec l'axe de vis (A-A), la première surface (32a) étant en appui contre la surface d'actionnement (38), de sorte qu'une translation de l'élément actionneur (36) dans la direction de verrouillage entraîne une translation de l'organe de verrouillage (9) à l'écart de l'axe de vis (A-A) et le mouvement de translation de l'élément mâle (11) depuis sa position déverrouillée vers sa position verrouillée.

5. Pack batterie (3) selon la revendication 2, dans lequel le mécanisme d'actionnement (130) est configuré pour opérer un mouvement de rotation de l'élément mâle (111) de sa position déverrouillée vers sa position verrouillée autour d'un axe de pivot (C-C) parallèle à la première cloison et orthogonal à l'axe de vis (B-B).

6. Pack batterie (3) selon les revendications 2 et 5, dans lequel l'élément actionneur (136) comprend un ergot (140) orthogonal à l'axe de vis (B-B), l'ergot (140) définissant la surface d'actionnement (138), la portion d'actionnement (132) de l'organe de verrouillage (109) étant montée mobile en rotation autour de l'axe de pivot (C-C) et définissant une gorge (141) dans laquelle est reçu l'ergot (140), de telle sorte que la translation de l'élément actionneur (136) dans la direction de verrouillage entraîne une rotation de la portion d'actionnement (132) autour de son axe de pivot (C-C) et une rotation correspondante de l'élément mâle (111) autour de l'axe de pivot (C-C) de sa position déverrouillée vers sa position verrouillée.

7. Pack batterie (3) selon l'une quelconque des revendications 1 à 6, dans lequel l'élément de fixation complémentaire est en forme de crochet (17) fixé sur la deuxième cloison (5d) ou comprend une empreinte (117) réalisée dans la deuxième cloison (5d).

8. Pack batterie (3) selon l'une quelconque des revendications 1 à 7, dans lequel la première cloison (5c) est une cloison latérale du coffre (5), et le système d'accorage (7) comprend en outre un élément mâle (245) transversal en forme de crochet, monté de manière fixe sur une cloison transversale (5a) du coffre (5), orthogonale à la première cloison (5c), l'élément mâle transversal (245) étant configuré pour venir en prise avec un élément de fixation transversal complémentaire (251) d'une paroi transversale (1a) de l'enceinte (1).

## Patentansprüche

1. Batteriesatz (3) eines Schiffes, wobei der Batteriesatz (3) einen Kasten (5) zur Aufnahme einer Vielzahl von Akkumulatoren und ein vom Kasten lösbares Andocksystem (7) an ein Gehäuse (1) des Schiffes umfasst, wobei das Andocksystem (7) mindestens ein Verriegelungsorgan (9; 109) umfasst, das ein hakenförmiges Steckelement (11; 111) umfasst, das an einer ersten Trennwand (5c) des Kastens (5) angebracht ist, wobei das Steckelement (11; 111) zwischen einer entriegelten Position und einer verriegelten Position betätigbar ist, wobei das Steckelement (11; 111) ausgelegt ist, um in seiner verriegelten Position mit einem komplementären Befestigungselement (17; 117; 217) einer ersten Wand (1c) des Gehäuses (1) oder einer Trennwand (5d) eines anderen Batteriesatzes, die der ersten Trennwand (5c) des Kastens (5) zugewandt angeordnet ist, in Eingriff zu kommen, wobei das Andocksystem (7) ferner einen Mechanismus (30; 130) zum Betätigen des Steckelements (11; 111) aus seiner entriegelten Position in seine verriegelte Position umfasst,
wobei das Verriegelungsorgan (9; 109) einen Betätigungsabschnitt (32; 132) umfasst, der im Inneren des Kastens (5) angeordnet ist, wobei das Steckelement (11; 111) mindestens in seiner verriegelten Position von dem Betätigungsabschnitt (32; 132) nach außerhalb des Kastens (5) vorsteht,
**dadurch gekennzeichnet, dass** das Andocksystem (7) ferner ein zu dem Steckelement (11) komplementäres Befestigungselement (17; 117) umfasst, das fest an einer zweiten Trennwand (5d) des Kastens (5) gegenüberliegend und parallel zu der ersten Trennwand (5c) angeordnet ist, wobei das komplementäre Befestigungselement (17; 117) dazu ausgelegt ist, mit dem Steckelement (11) eines anderen Batteriesatzes zusammenzuwirken, der der zweiten Trennwand (5d) zugewandt angeordnet ist.

2. Batteriesatz (3) nach Anspruch 1, wobei der Betätigungsmechanismus (30; 130) eine Schraube (34; 134) umfasst, die sich gemäß einer Schraubenachse (A-A; B-B) im Wesentlichen parallel zu der ersten Trennwand (5c) erstreckt, und ein Betätigungselement (36; 136), das in Eingriff mit einem Gewinde der Schraube (34; 134) steht, wobei die Schraube (34; 134) gemäß ihrer Achse (A-A; B-B) translationsfest montiert ist und das Betätigungselement (36; 136) um die Schraubenachse (A- A; B-B) drehfest montiert ist, so dass eine Drehung der Schraube (34; 134) in einer ersten Richtung eine Translation des Betätigungselements (36) gemäß der Schraubenachse (A-A; B-B) in einer Verriegelungsrichtung (DV1) bewirkt, wobei das Betätigungselement (36; 136) eine Betätigungsfläche (38; 138) umfasst, die geeignet ist, mit dem Betätigungsabschnitt (32; 132) des Verriegelungsorgans (9; 109) derart zusammenzuwirken, dass die Translation des Betätigungselements (36; 136) in der Verriegelungsrichtung (DV1) eine Betätigung des Steckelements (11; 111) aus seiner entriegelten Position zu seiner verriegelten Position bewirkt.

3. Batteriesatz nach Anspruch 1 oder 2, wobei das Steckelement (11) aus dem Kasten (5) in seiner entriegelten Position in einem ersten Abstand (d1) von der ersten Trennwand (5c) nach außen vorsteht und aus dem Kasten (5) in seiner verriegelten Position in einem zweiten Abstand (d2) von der ersten Trennwand nach außen vorsteht, wobei der zweite Abstand (d2) strikt kleiner als der erste Abstand (d1) ist, wobei der Betätigungsmechanismus (30) ausgelegt ist, um eine Translationsbewegung des Steckelements (11) aus seiner entriegelten Position in seine verriegelte Position in einer Richtung (TV) orthogonal zu der ersten Trennwand (5c) durchzuführen.

4. Batteriesatz (3) nach den Ansprüchen 2 und 3, wobei der Betätigungsabschnitt (32) des Verriegelungsorgans (9) gemäß der Schraubenachse (A-A) translationsfest montiert ist und eine erste Oberfläche (32a) umfasst, die einen Winkel α ungleich Null mit der Schraubenachse (A-A) bildet, wobei die erste Oberfläche (32a) zur Schraubenachse (A-A) in der Verriegelungsrichtung (DV1) ausgerichtet ist, wobei die Betätigungsfläche (38) des Betätigungselements (36) eine zweite Oberfläche ist, die den Winkel α mit der Schraubenachse (A-A) bildet, wobei die erste Oberfläche (32a) an der Betätigungsfläche (38) anliegt, so dass eine Translation des Betätigungselements (36) in der Verriegelungsrichtung eine Translation des Verriegelungsorgans (9) von der Schraubenachse (A-A) weg und die Translationsbewegung des Steckelements (11) aus seiner entriegelten Position in seine verriegelte Position bewirkt.

5. Batteriesatz (3) nach Anspruch 2, wobei der Betätigungsmechanismus (130) ausgelegt ist, um eine Drehbewegung des Steckelements (111) aus seiner entriegelten Position in seine verriegelte Position um eine Schwenkachse (C-C) parallel zu der ersten Trennwand und orthogonal zur Schraubenachse (B-B) durchzuführen.

6. Batteriesatz (3) nach Anspruch 2 und 5, wobei das Betätigungselement (136) einen Stift (140) orthogonal zur Schraubenachse (B-B) umfasst, wobei der Stift (140) die Betätigungsfläche (138) definiert, wobei der Betätigungsabschnitt (132) des Verriegelungsorgans (109) drehbeweglich um die Schwenkachse (C-C) montiert ist und eine Nut (141) definiert, in der der Stift (140) aufgenommen ist, so dass die Translation des Betätigungselements (136) in der Verriegelungsrichtung eine Drehung des Betätigungsabschnitts (132) um seine Schwenkachse (C-C) und eine entsprechende Drehung des Steckelements (111) um die Schwenkachse (C-C) aus seiner entriegelten Position in seine verriegelte Position bewirkt.

7. Batteriesatz (3) nach einem der Ansprüche 1 bis 6, wobei das komplementäre Befestigungselement die Form eines Hakens (17) hat, der an der zweiten Trennwand (5d) befestigt ist, oder eine Vertiefung (117) umfasst, die in der zweiten Trennwand (5d) ausgebildet ist.

8. Batteriesatz (3) nach einem der Ansprüche 1 bis 7, wobei die erste Trennwand (5c) eine seitliche Trennwand des Kastens (5) ist und das Andocksystem (7) ferner ein hakenförmiges transversales Steckelement (245) umfasst, das fest an einer transversalen Trennwand (5a) des Kastens (5) angebracht ist, die orthogonal zu der ersten Trennwand (5c) ist, wobei das transversale Steckelement (245) ausgelegt ist, um mit einem komplementären transversalen Befestigungselement (251) einer transversalen Wand (1a) des Gehäuses (1) in Eingriff zu kommen.

## Claims

1. Battery pack (3) of a naval ship, the battery pack (3) comprising a compartment (5) intended to receive a plurality of accumulators, and a docking system (7) removable for docking the compartment to an enclosure (1) of the naval ship, the docking system (7) comprising at least one locking member (9; 109) comprising a male element (11; 111) in the form of a hook, mounted on a first partition (5c) of the compartment (5), said male element (11; 111) being actuatable between an unlocked position and a locked position, said male element (11; 111) being designed, in its locked position, to engage with an additional fixing element (17; 117; 217) of a first wall (1c) of the enclosure (1) or of a partition (5d) of another battery pack arranged opposite the first partition (5c) of the compartment (5), the docking system (7) further comprising an actuation mechanism (30; 130) for actuating the male element (11; 111) from its unlocked position to its locked position,
the locking member (9; 109) comprising an actuating portion (32; 132), disposed inside the compartment (5), and said male element (11; 111), said male element (11; 111) protruding from the actuating portion (32; 132) towards the outside of the compartment (5), at least in its locked position,
**characterized in that** the docking system (7) further comprises a fixing element (17; 117) complementary to said male element (11), arranged in fixed manner on a second partition (5d) of the compartment (5), opposite and parallel to the first partition (5c), the complementary fixing element (17; 117) being designed to interact with the male element (11) of another battery pack disposed opposite the second partition (5d).

2. Battery pack (3) according to claim 1, wherein the actuating mechanism (30; 130) comprises a screw (34; 134) extending along a screw axis (A-A; B-B) substantially parallel to the first partition (5c) and an actuator element (36; 136) mounted in engagement with a thread of the screw (34; 134), the screw (34; 134) being fixedly mounted in translation along its axis (A-A; B-B), and the actuator element (36; 136) being mounted fixed in rotation about the screw axis (A-A; B-B) so that a rotation of the screw (34; 134) in a first direction actuates a translation of the actuator element (36) along the screw axis (A-A; B-B) in a locking direction (DV1; DV2), the actuator element (36; 136) comprising a specific actuating surface (38; 138) to interact with the actuating portion (32; 132) of the locking member (9; 109) such that the translation of the actuating element (36; 136) in the locking direction (DV1; DV2) causes actuation of the male element (11; 111) from its unlocked position to its locked position.

3. Battery pack according to claim 1 or 2, wherein said male element (11) protrudes outwards from the compartment (5) at a first distance (d1) from the first partition (5c) in its unlocked position, and protrudes outwards from the compartment (5) at a second distance (d2) from the first partition in its locked position, the second distance (d2) being strictly less than the first distance (d1), the actuation mechanism (30) being designed to actuate a translation movement of the male element (11) from its unlocked position to its locked position in a direction (TV) orthogonal to the first partition (5c).

4. Battery pack (3) according to claims 2 and 3, wherein the actuating portion (32) of the locking member (9) is mounted fixed in translation along the screw axis (A-A) and comprises a first surface (32a) forming a non-zero angle α with the screw axis (A-A), said first surface (32a) being oriented towards the screw axis (A-A) in the locking direction (DV1), the actuation surface (38) of the actuator element (36) being a second surface forming said angle α with the screw axis (AA), the first surface (32a) being supported against the actuating surface (38), so that a translation of the actuator element (36) in the locking direction actuates a translation of the locking member (9) away from the screw axis (A-A), and the translation movement of the male member (11) from its unlocked position to its locked position.

5. Battery pack (3) according to claim 2, wherein the actuating mechanism (130) is designed to actuate a rotational movement of the male element (111) from its unlocked position to its locked position about a pivot axis (CC) parallel to the first partition and orthogonal to the screw axis (BB).

6. Battery pack (3) according to claims 2 and 5, wherein the actuator element (136) comprises a lug (140) orthogonal to the screw axis (BB), the lug (140) defining the actuation surface (138), the actuation portion (132) of the locking member (109) being mounted movably in rotation about the pivot axis (C-C) and defining a groove (141) in which is received the lug (140), such that the translation of the actuator element (136) in the locking direction (DV2) actuates a rotation of the actuation portion (132) about its pivot axis (C-C) and a corresponding rotation of the male element (111) about the pivot axis (C-C) from its unlocked position to its locked position.

7. Battery pack (3) according to any one of claims 1 to 6, wherein the complementary fixing element is in the form of a hook (17) fixed on the second partition (5d), or comprises an indentation (117) made in the second partition (5d).

8. Battery pack (3) according to any one of claims 1 to 7, wherein the first partition (5c) is a lateral partition of the compartment (5), while the docking system (7) further comprises a hook-shaped transverse male element (245), fixedly mounted on a lateral partition (5a) of the compartment (5), orthogonal to the first partition (5c), the transverse male element (245) being designed to engage with a complementary transverse fixing element (251) of a lateral wall (1a) of the enclosure (1).
